# EUROPÄISCHE PATENTSCHRIFT

(11) **EP 2 607 273 B1**
(45) Veröffentlichungstag und Bekanntmachung des Hinweises auf die Patenterteilung: **04.10.2017**
(21) Anmeldenummer: 12007703.7
(22) Anmeldetag: 14.11.2012
(51) Int. Cl.: B65G 47/06, B65G 47/51, B65G 47/84, C21D 9/00, C21D 8/12, F26B 15/06

(54) **Behandlungsanordnung für ferromagnetische Teile**
Treatment assembly for ferromagnetic parts
Installation de traitement pour pièces ferro-magnétiques

(30) Priorität: 25.11.2011 DE 102011119366
(43) Veröffentlichungstag der Anmeldung: 26.06.2013
(73) Patentinhaber: GESI Gewindesicherungs-GmbH, 73207 Plochingen (DE)
(72) Erfinder: Baumann, Waldemar, 73734 Esslingen (DE)
(74) Vertreter: Thiel, Christian

(56) Entgegenhaltungen:
- WO-A1-2010/116805
- US-A- 3 490 575

## Beschreibung

Die Erfindung betrifft eine Behandlungsanordnung für ferromagnetische Teile, insbesondere Schrauben und Muttern, umfassend wenigstens ein Behandlungsrad mit wenigstens einem Magneten zum Halten der ferromagnetischen Teile am Umfang des Behandlungsrades, eine Zuführvorrichtung zum Zuführen der ferromagnetischen Teile zum Behandlungsrad und zum Platzieren der ferromagnetischen Teile auf eine erste Umfangslinie des Behandlungsrades, eine Behandlungsvorrichtung zum Behandeln der ferromagnetischen Teile und eine Abführvorrichtung zum Entfernen der ferromagnetischen Teile vom Behandlungsgrad, wobei das Behandlungsgrad wenigstens eine weitere Umgangslinie zum Halten der ferromagnetischen Teile umfasst. Behandlungsanordnungen für ferromagnetische Teile der eingangs genannten Art werden in der Regel als Trocknungsvorrichtung verwendet, insbesondere nach einer Beschichtung von Gewindeabschnitten von Schrauben und Muttern mit Zusammensetzungen, welche einem Lösen einer Schraubverbindung entgegenwirken. Eine Vorwärmung ist oft benötigt, um die zu behandelnden Teile auf eine geeignete Behandlungstemperatur zu bringen.

Die Trocknungsvorrichtung ist mit einem oder einer Mehrzahl von Magneten ausgestattet, die zum Halten der beschichteten Teile dienen, wobei die behandelten Abschnitte der Teile derart positioniert sind, dass diese freistehen und nicht mit anderen benachbarten Teilen oder Maschinenelementen in Berührung kommen. Die Trocknungsvorrichtung ist in der Regel in einem beheizten Raum angeordnet, um eine optimale Trocknung zu gewährleisten.

Problematisch bei solchen Vorrichtungen ist aber, dass diese sehr große Dimensionen aufweisen. Dies weil die Größe der Behandlungsräder einerseits von der gewünschten Länge der Trocknungstrecke und andererseits von der gewünschten - angestrebt ist eine sehr hohe - Durchlaufleistung der Anlage beeinflusst wird. Bei gleichbleibender Soll-Verweilzeit aber steigender Durchlaufleistung muss somit die Länge der Trocknungsstrecke - und folglich der Durchmesser des Trocknungsrades - verlängert werden. Daraus resultieren sehr hohe Betriebskosten, da für den Antrieb und die Trocknung der Größe der Trocknungsvorrichtung entsprechend dimensionierte Mittel vorgesehen sein müssen. Hinzu kommt, dass die Überwachung einer solchen Trocknungsvorrichtung aufgrund der Größe nicht durch eine einzige Person möglich ist.

Aus der US 3 490 575 ist eine Behandlungsanordnung nach dem Oberbegriff des Anspruchs 1 bekannt, die eine Vielzahl von Behandlungsrädern mit jeweils zwei Umfangslinien aufweist. Die zu behandelnden Gegenstände werden von Rad zu Rad weitergegeben.

Davon ausgehend liegt der Erfindung die Aufgabe zugrunde, eine neuartige Behandlungsanordnung für ferromagnetische Teile mit einem geringen Platzbedarf, niedrigen Herstellungs- und Betriebskosten, verringertem Überwachungsaufwand und erhöhter Produktionsleistung anzugeben.

Die Aufgabe wird dadurch gelöst, dass die Behandlungsanordnung ferner ein Umlenkblech zum Transferieren der ferromagnetischen Teile von der ersten Umfangslinie des Behandlungsrades zu einer zweiten benachbarten Umfangslinie des Behandlungsrades umfasst.

Damit wird erreicht, dass bei gleichbleibender Trocknungsstrecke der ferromagnetischen Teile der Umfang des Behandlungsrades um die Hälfte reduziert werden kann, weil die Trocknungsstrecke das Zweifache des Umfanges des Behandlungsrades beträgt. Auch werden damit Energieeinsparungen erzielt, da das aufzuwärmende Volumen eines Raumes, in dem das Behandlungsrad angeordnet ist, eindeutig kleiner ausfällt als bei einem Trocknungsrad nach dem Stand der Technik. Auch die notwendige Antriebsleistung wird gegenüber dem Stand der Technik verringert. Es ist außerdem ersichtlich, dass eine kleinere Anordnung nur von einer Person überwacht werden kann.

Eine weiter bevorzugte Ausführungsform der Erfindung sieht vor, dass die Behandlungsanordnung ferner ein Umlenkblech zum Transferieren der ferromagnetischen Teile von der zweiten Umfangslinie des Behandlungsrades zu einer dritten benachbarten Umfangslinie des Behandlungsrades umfasst.

Weiter bevorzugt ist eine Ausführungsform, bei welcher ein Umlenkblech zum Transferieren der ferromagnetischen Teile von der dritten Umfangslinie des Behandlungsrades zu einer vierten benachbarten Umfangslinie des Behandlungsrades vorgesehen sind.

Hierdurch wird ferner eine weitere Verkleinerung der Anlage ermöglicht. Dadurch kann die Produktionsleistung bei gleichzeitiger Absenkung der Betriebskosten gesteigert werden, da auf einer gleichen Fläche mehrere Anlagen angeordnet werden können.

Im Sinne der Erfindung wird als Umfangslinie des Behandlungsrades ein, im Wesentlichen gradlinig, entlang des Umfanges des Behandlungsrades verlaufender Flächenabschnitt verstanden. Erfindungsgemäß sind die Mittel zum Transferieren der ferromagnetischen Teile als Umlenkblech ausgebildet. Durch diese einfache Ausgestaltung der Mittel zum Transferieren der ferromagnetischen Teile kann eine kostengünstig herzustellende aber effektive und im Wesentlichen störungsfreie Verschiebung der ferromagnetischen Teile von einer Umfangslinie des Behandlungsrades zu einer benachbarten Umfangslinie des Behandlungsrades bewirkt werden.

Zum Entfernen der Teile aus dem Behandlungsrad ist die Abführvorrichtung vorzugsweise ebenfalls als Umlenkblech ausgebildet.

Eine noch bevorzugtere Ausführungsform sieht vor, dass die Behandlungsvorrichtung unmittelbar in der Nähe des Behandlungsrades zum Behandeln von sich drehenden ferromagnetischen Teilen ausgebildet ist.

Damit wird erreicht, dass eine noch kompaktere Behandlungsanordnung bereitgestellt werden kann, da das Vorschalten einer Behandlungsvorrichtung entfällt. Auch kann es vorgesehen sein, dass die Ausgestaltung der Behandlungsvorrichtung modular erfolgen kann. Beispielweise kann dem eigentlichen Behandlungsschritt eine Vorbehandlung, etwa eine Vorwärmung, vorgeschaltet werden, so dass die sich drehenden ferromagnetischen Teile direkt auf dem Behandlungsrad einem kompletten Behandlungsverfahren unterzogen werden können.

Die Behandlungsvorrichtung ist weiter bevorzugt zum Durchführen wenigstens einer Behandlung ausgewählt aus einer Liste umfassend Vorwärmen, Beschichten, Oberflächenveredeln und Trocknen ausgebildet.

Die Erfindung sieht ferner vor, dass das Behandlungsrad mit einer Mehrzahl von Magneten ausgestattet ist. Dadurch wird der Fertigungsaufwand des Behandlungsrades verringert.

Weiter bevorzugt sind die Magnete der Mehrzahl von Magneten zum Halten eines einzelnen ferromagnetischen Teils ausgebildet. Dies erfolgt bevorzugt, indem die Magneten entsprechend dimensioniert und voneinander beabstandet angeordnet werden, so dass deren Fläche und Magnetkraft nur jeweils zum Halten eines einzelnen ferromagnetischen Teils ausreichend ist. Die ferromagnetischen Teile können somit ebenfalls entlang des Umfanges des Behandlungsrades beabstandet angeordnet werden. Dies ist besonders vorteilhaft, wenn für die durchzuführende Behandlung die Teile notwendigerweise einen minimalen Abstand aufweisen müssen, damit eine komplette Beschichtung des Gewindeabschnittes einer Schraube durchgeführt werden kann. Auch wird damit vermieden, dass benachbart angeordnete ferromagnetische Teile während der Trocknung miteinander in Berührung kommen und dadurch die durchgeführte Behandlung negativ beeinflusst wird.

Die Behandlungsanordnung umfasst vorzugsweise eine Mehrzahl von Behandlungsrädern. Insbesondere wenn die Behandlungsräder übereinander angeordnet werden kann, mit dem gleichen Platzbedarf einer erfindungsgemäßen Behandlungsanordnung die Produktionsleistung durch die Benutzung mehrerer Behandlungsräder erhöht werden, wobei die Herstellungs- und Betriebskosten gesenkt werden, dadurch, dass ein einziger Antrieb für die Mehrzahl der Behandlungsräder oder eine einzige Heizquelle für die Trocknung bereitgestellt wird.

Eine weitere bevorzugte Ausführungsform sieht vor, dass wenigstens eine Umfangslinie auf einem anderen Behandlungsrad als die benachbarte Umfangslinie angeordnet ist. Das ist insbesondere vorteilhaft, wenn ein weiterer Verfahrensschritt der erfindungsgemäßen Behandlungsanordnung nachgeschaltet ist. Das zweite Behandlungsrad kann somit als Puffer vorgesehen werden, so dass wenn der nachgeschaltete Verfahrensschritt, z.B. aufgrund einer Störung, nicht durchgeführt werden kann, die erfindungsgemäße Behandlungsanordnung nicht notwendigerweise angehalten werden muss. Die bereits behandelten ferromagnetischen Teile werden hierfür mit an sich bekannten Mitteln zum benachbarten Behandlungsrad geführt und durchlaufen eine Pufferstrecke, bis der nachgeschaltete Verfahrensschritt wieder durchgeführt werden kann.

Ausführungsbeispiele der Erfindung werden im Folgenden anhand der Figuren näher erläutert. Es zeigen:
- Figur 1:: eine Seitenansicht der ersten bevorzugten Ausführungsform der Erfindung;
- Figur 2:: eine Detailansicht der Mittel zum Transferieren der ferromagnetischen Teile der Figur 1;
- Figur 3:: eine zweite bevorzugte Ausführungsform der Erfindung.

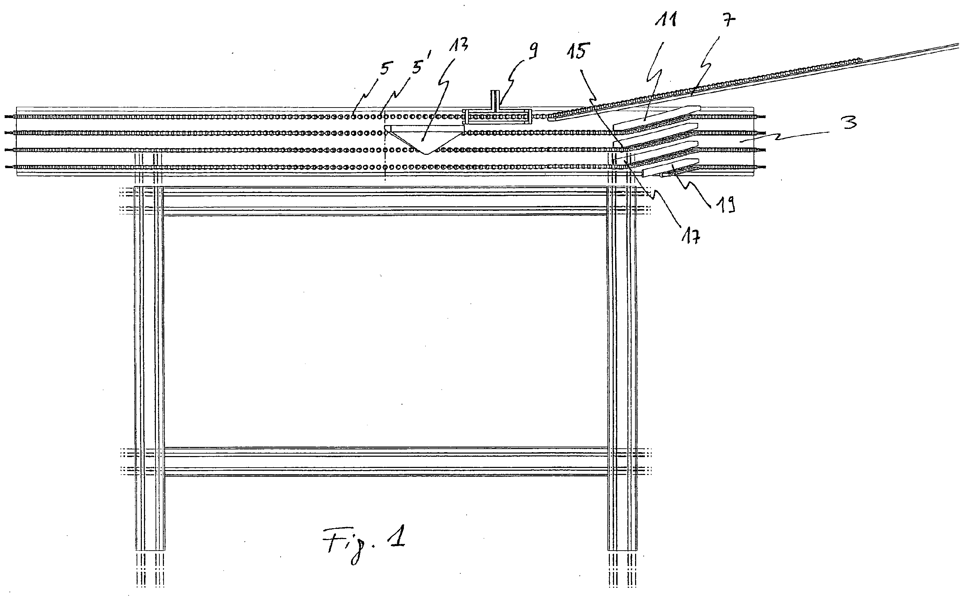

Die Figur 1 zeigt eine in ihrer Gesamtheit mit 1 bezeichnete erfindungsgemäße Behandlungsanordnung 1 für ferromagnetische Teile. Die Behandlungsanordnung 1 umfasst ein Behandlungsrad 3, welches mit wenigstens einem aufgrund der Übersichtlichkeit nicht dargestellten Magneten versehen ist, der auf einer Umfangsfläche des Behandlungsrades 3 angeordnet ist. Der Magnet dient zum Halten von zu behandelnden Teilen 5, 5', von denen ebenfalls nur einige aufgrund der Übersichtlichkeit mit Bezugszeichen versehen sind. Das Behandlungsrad 3 wird außerdem mit an sich bekannten Mitteln angetrieben und in Drehung versetzt.

Bei den zu beschichtenden Teilen 5, 5' handelt es sich hier um Schrauben. Die zu behandelnden Schrauben 5, 5' werden von einem als Rutsche ausgebildeten Blech 7 durch Schwerkrafteinwirkung dem Behandlungsrad 3 zugeführt. Die Schrauben 5, 5' sind außerdem derart angeordnet, dass ihre Schraubenköpfe der Umfangsfläche des Behandlungsrades 3 zugewandt sind. Durch die Magnetkraft des auf der Umfangsfläche des Behandlungsrades 3 angeordneten Magneten bleiben die Schraubenköpfe der Schrauben 5, 5' an diesem entlang einer ersten Umfangslinie des Behandlungsrades 3 haften.

Die Schrauben 5, 5' durchlaufen dann zunächst eine schematisch mit 9 dargestellte Heizeinrichtung, wo diese auf Behandlungstemperatur gebracht werden. Der Aufbau der Heizeinrichtung 9 ist an sich für einen Fachmann bekannt. Diese kann beispielweise als induktive Heizung, als Heizstrahler, als Brenner usw. ausgebildet sein.

Nach einer Drehung des Behandlungsrades 3 von etwa 340° gelangen die Schrauben 5, 5' dann zu einer Umlenkplatte 11, welche die Verschiebung der Schrauben 5, 5' von der ersten Umfangslinie zu einer zweiten benachbarten und darunter liegenden zweiten Umfangslinie bewirkt.

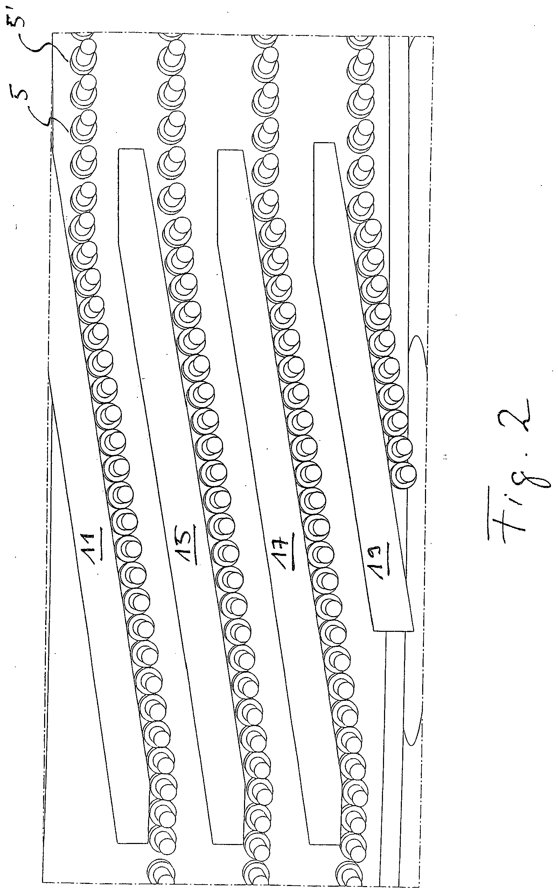

In der Figur 2 ist eine Detailansicht der Umlenkplatte 11 gezeigt. Beim Drehen des Behandlungsrades 3 erfahren die Schraubenköpfe der Schrauben 5, 5' einen Anschlag gegen eine Fläche der Umlenkplatte 11, welche in Tangentialrichtung des Behandlungsrades 3 betrachtet diagonal nach unten gerichtet ist. Dadurch werden die Schraubenköpfe der Schrauben 5, 5' axial nach unten entlang der Umfangsfläche des Behandlungsrades 3 verschoben.

Die Schrauben 5, 5', welche sich jetzt entlang einer zweiten Umfangslinie der Behandlungsrades 3 bewegen, gelangen dann zu einer Behandlungsvorrichtung 13, wo die eigentliche Behandlung der Schrauben 5, 5' stattfindet. Bei der in der Figur 1 dargestellten Behandlungsvorrichtung 13 handelt es sich um eine Beschichtungsvorrichtung, welche an sich für den Fachmann bekannt ist und keiner weiteren Erläuterung bedarf.

Es ist ferner aus den Figuren 1 und 2 ersichtlich, dass nach einer erneuten Drehung des Behandlungsrades 3 um etwa 340° die Schrauben 5, 5' welche sich entlang einer zweiten Umfangslinie des Behandlungsrades 3 bewegen, zu einer weiteren Umlenkplatte 15 gelangen, wo diese analog zur ersten Umlenkplatte 11 von der zweiten Umfangslinie zu einer dritten benachbarten und darunter liegenden Umlauflinie verschoben werden.

Ähnlich verhält es sich mit der mit 17 bezeichneten Umlenkplatte, welche dazu dient, die Schrauben 5, 5' von der dritten Umfangslinie zu einer vierten benachbarten und darunter liegenden Umlauflinie zu verschieben.

Ferner ist eine weitere Umlenkplatte 19 vorgesehen, welche dazu dient, die Schrauben 5, 5' von dem Behandlungsrad 3 zu entfernen, indem diese vom Behandlungsrad 3 nach unten gelenkt, bis die Magnetkraft zum Halten der Schrauben 5, 5' auf dem Umfang des Behandlungsrades 3 nicht mehr ausreicht, und folglich vom Behandlungsrad 3 abgestreift werden. Die Schrauben 5, 5' können anschließend mit an sich bekannten Mitteln einem weiteren Verfahrensschritt zugeführt werden.

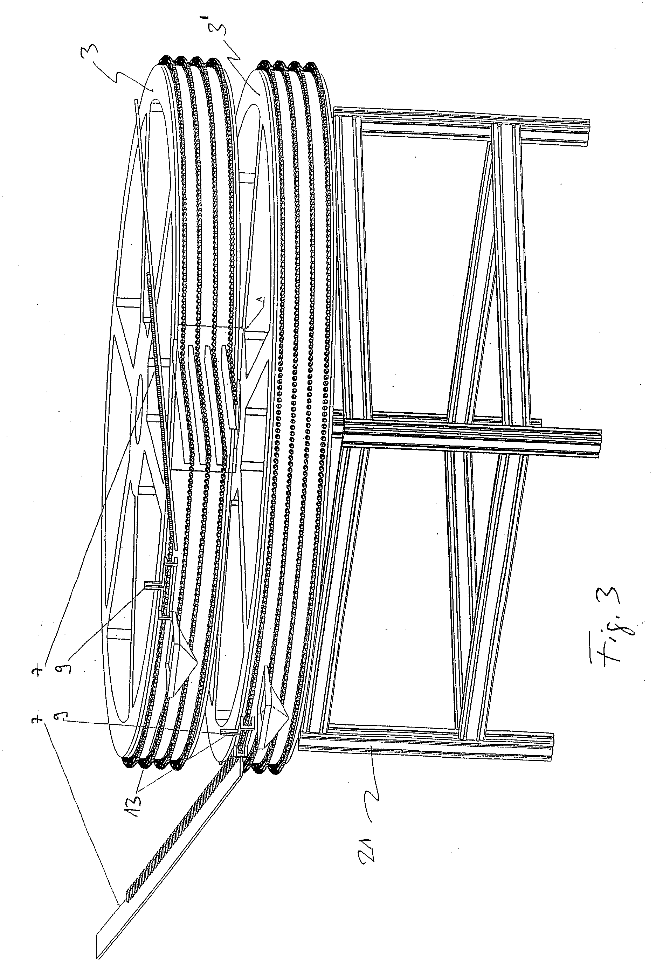

Die Figur 3 zeigt eine weiter bevorzugte Ausführungsform der Erfindung, wobei zwei Behandlungsräder 3, 3' auf einem Rahmen 21 angeordnet sind. In diesem Fall ist es vorgesehen, dass die Behandlungsräder 3, 3' sich in entgegengesetzten Richtungen drehen und jeweils mit einer Vorwärmeinrichtung und einer Behandlungseinrichtung ausgestattet sind.

Es kann aber durchaus vorgesehen sein, dass je nach Verwendungszweck das zusätzliche Behandlungsrad 3' nur als Puffer- oder als Zusatzbehandlungsrad, um die Trocknungszeit und die Trocknungsstrecke zu erhöhen, für das eigentliche Behandlungsrad 3 dient.

## Patentansprüche

1. Behandlungsanordnung für ferromagnetische Teile (5, 5'), insbesondere Schrauben und Muttern, umfassend wenigstens:
- ein Behandlungsrad (3) mit wenigstens einem Magneten zum Halten der ferromagnetischen Teile am Umfang des Behandlungsrades (3),
- eine Zuführvorrichtung (7) zum Zuführen der ferromagnetischen Teile zum Behandlungsrad (3) und zum Platzieren der ferromagnetischen Teile auf eine erste Umfangslinie des Behandlungsrades (3),
- eine Behandlungsvorrichtung (13) zum Behandeln der ferromagnetischen Teile, und
- eine Abführvorrichtung (19) zum Entfernen der ferromagnetischen Teile vom Behandlungsrad (3),
- wobei das Behandlungsrad (3) wenigstens eine weitere Umfangslinie zum Halten der ferromagnetischen Teile umfasst,
**dadurch gekennzeichnet, dass** die Behandlungsanordnung ferner ein Umlenkblech (11) zum Transferieren der ferromagnetischen Teile von der ersten Umfangslinie des Behandlungsrades (3) zu einer zweiten benachbarten Umfangslinie des Behandlungsrades (3) umfasst.

2. Behandlungsanordnung nach Anspruch 1, **dadurch gekennzeichnet, dass** die Behandlungsanordnung ferner ein Umlenkblech (15) zum Transferieren der ferromagnetischen Teile von der zweiten Umfangslinie des Behandlungsrades (3) zu einer dritten benachbarten Umfangslinie des Behandlungsrades (3) umfasst.

3. Behandlungsanordnung nach Anspruch 2, **dadurch gekennzeichnet, dass** die Behandlungsanordnung ferner ein Umlenkblech (17) zum Transferieren der ferromagnetischen Teile von der dritten Umfangslinie des Behandlungsrades (3) zu einer vierten benachbarten Umfangslinie des Behandlungsrades (3) umfasst.

4. Behandlungsanordnung nach einem der vorherigen Ansprüche, **dadurch gekennzeichnet, dass** die Abführvorrichtung (19) als Umlenkblech ausgebildet ist.

5. Behandlungsanordnung nach einem der vorherigen Ansprüche, **dadurch gekennzeichnet, dass** die Behandlungsvorrichtung (13) unmittelbar in der Nähe des Behandlungsrades (3) zum Behandeln von sich drehenden ferromagnetischen Teilen ausgebildet ist.

6. Behandlungsanordnung nach einem der vorherigen Ansprüche, **dadurch gekennzeichnet, dass** die Behandlungsvorrichtung (13) zum Durchführen wenigstens einer Behandlung ausgewählt aus einer Liste umfassend Vorwärmen, Beschichten, Oberflächenveredeln und Trocknen ausgebildet ist.

7. Behandlungsanordnung nach einem der vorherigen Ansprüche, **dadurch gekennzeichnet, dass** das Behandlungsrad (3) mit einer Mehrzahl von Magneten ausgestattet ist.

8. Behandlungsanordnung nach Anspruch 7, **dadurch gekennzeichnet, dass** jeder Magnet der Mehrzahl von Magneten zum Halten eines einzelnen ferromagnetischen Teils ausgebildet ist.

9. Behandlungsanordnung nach einem der vorherigen Ansprüche, **dadurch gekennzeichnet, dass** sie eine Mehrzahl von Behandlungsrädern (3, 3') umfasst.

10. Behandlungsanordnung nach Anspruch 9, **dadurch gekennzeichnet, dass** wenigstens eine Umfangslinie auf einem anderen Behandlungsrad (3') als eine benachbarte Umfangslinie angeordnet ist.

## Claims

1. Treatment arrangement for ferromagnetic parts (5, 5'), in particular bolts and nuts, comprising at least:
- a treatment wheel (3) with at least one magnet for holding the ferromagnetic parts on the circumference of the treatment wheel (3),
- a feeding apparatus (7) for feeding the ferromagnetic parts to the treatment wheel (3) and for placing the ferromagnetic parts onto a first circumferential line of the treatment wheel (3),
- a treatment apparatus (13) for treating the ferromagnetic parts, and
- a discharging apparatus (19) for removing the ferromagnetic parts from the treatment wheel (3),
- the treatment wheel (3) comprising at least one further circumferential line for holding the ferromagnetic parts,
**characterized in that**, furthermore, the treatment arrangement comprises a deflecting plate (11) for transferring the ferromagnetic parts from the first circumferential line of the treatment wheel (3) to a second adjacent circumferential line of the treatment wheel (3).

2. Treatment arrangement according to Claim 1, **characterized in that**, furthermore, the treatment arrangement comprises a deflecting plate (15) for transferring the ferromagnetic parts from the second circumferential line of the treatment wheel (3) to a third adjacent circumferential line of the treatment wheel (3).

3. Treatment arrangement according to Claim 2, **characterized in that**, furthermore, the treatment arrangement comprises a deflecting plate (17) for transferring the ferromagnetic parts from the third circumferential line of the treatment wheel (3) to a fourth adjacent circumferential line of the treatment wheel (3).

4. Treatment arrangement according to one of the preceding claims, **characterized in that** the discharging apparatus (19) is configured as a deflecting plate.

5. Treatment arrangement according to one of the preceding claims, **characterized in that** the treatment apparatus (13) is configured immediately in the vicinity of the treatment wheel (3) for treating rotating ferromagnetic parts.

6. Treatment arrangement according to one of the preceding claims, **characterized in that** the treatment apparatus (13) is configured for carrying out at least one treatment selected from a list comprising preheating, coating, surface finishing and drying.

7. Treatment arrangement according to one of the preceding claims, **characterized in that** the treatment wheel (3) is equipped with a plurality of magnets.

8. Treatment arrangement according to Claim 7, **characterized in that** each magnet of the plurality of magnets is configured for holding a single ferromagnetic part.

9. Treatment arrangement according to one of the preceding claims, **characterized in that** it comprises a plurality of treatment wheels (3, 3').

10. Treatment arrangement according to Claim 9, **characterized in that** at least one circumferential line is arranged on another treatment wheel (3') as an adjacent circumferential line.

## Revendications

1. Installation de traitement pour pièces ferromagnétiques (5, 5'), en particulier pour des vis et des écrous, comprenant au moins :
- une roue de traitement (3) comprenant au moins un aimant pour retenir les pièces ferromagnétiques sur la périphérie de la roue de traitement (3),
- un dispositif d'alimentation (7) pour alimenter les pièces ferromagnétiques à la roue de traitement (3) et pour placer les pièces ferromagnétiques sur une première ligne périphérique de la roue de traitement (3),
- un dispositif de traitement (13) pour traiter les pièces ferromagnétiques, et
- un dispositif d'évacuation (19) pour les pièces ferromagnétiques de la roue de traitement (3),
- la roue de traitement (3) comprenant au moins une ligne périphérique supplémentaire pour retenir les pièces ferromagnétiques,
**caractérisée en ce que** l'installation de traitement comprend en outre une tôle de déviation (11) pour transférer les pièces ferromagnétiques de la première ligne périphérique de la roue de traitement (3) à une deuxième ligne périphérique adjacente de la roue de traitement (3).

2. Installation de traitement selon la revendication 1, **caractérisée en ce que** l'installation de traitement comprend en outre une tôle de déviation (15) pour transférer les pièces ferromagnétiques de la deuxième ligne périphérique de la roue de traitement (3) à une troisième ligne périphérique adjacente de la roue de traitement (3).

3. Installation de traitement selon la revendication 2, **caractérisée en ce que** l'installation de traitement comprend en outre une tôle de déviation (17) pour transférer les pièces ferromagnétiques de la troisième ligne périphérique de la roue de traitement (3) à une quatrième ligne périphérique adjacente de la roue de traitement (3).

4. Installation de traitement selon l'une quelconque des revendications précédentes, **caractérisée en ce que** le dispositif d'évacuation (19) est réalisé sous forme de tôle de déviation.

5. Installation de traitement selon l'une quelconque des revendications précédentes, **caractérisée en ce que** le dispositif de traitement (13) est réalisé à proximité immédiate de la roue de traitement (3) pour traiter des pièces ferromagnétiques en rotation.

6. Installation de traitement selon l'une quelconque des revendications précédentes, **caractérisée en ce que** le dispositif de traitement (13) est réalisé pour effectuer au moins un traitement choisi parmi une liste comprenant un préchauffage, un revêtement, une amélioration de la surface et un séchage.

7. Installation de traitement selon l'une quelconque des revendications précédentes, **caractérisée en ce que** la roue de traitement (3) est munie d'une pluralité d'aimants.

8. Installation de traitement selon la revendication 7, **caractérisée en ce que** chaque élément de la pluralité d'aimants est réalisé pour retenir une pièce ferromagnétique individuelle.

9. Installation de traitement selon l'une quelconque des revendications précédentes, **caractérisée en ce qu'**elle comprend une pluralité de roues de traitement (3, 3').

10. Installation de traitement selon la revendication 9, **caractérisée en ce qu'**au moins une ligne périphérique est disposée sur une autre roue de traitement (3') qu'une ligne périphérique adjacente.
